(19) **Europäisches Patentamt / European Patent Office / Office européen des brevets**

(11) **EP 2 085 790 B1**

(12) # FASCICULE DE BREVET EUROPEEN

(45) Date de publication et mention
de la délivrance du brevet:
**20.08.2014 Bulletin 2014/34**

(51) Int Cl.:
**G01S 7/497** (2006.01)  **B60Q 1/30** (2006.01)

(21) Numéro de dépôt: **09151888.6**

(22) Date de dépôt: **02.02.2009**

(54) **Procédé de détection d'un oeil contre un faisceau lumineux émis par un véhicule**

Verfahren zur Erkennung eines Auges, das in einen Lichtstrahl schaut, der von einem Fahrzeug ausgesendet wird

Method of detecting an eye with a light beam emitted by a vehicle

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **04.02.2008 FR 0800599**

(43) Date de publication de la demande:
**05.08.2009 Bulletin 2009/32**

(73) Titulaire: **Valeo Vision**
**93012 Bobigny Cedex (FR)**

(72) Inventeurs:
• **Robert, Caroline**
**75017 Paris (FR)**
• **Hue, David**
**78400 Chatou (FR)**

(56) Documents cités:
EP-A- 1 553 429     DE-A1- 3 903 501
DE-A1- 19 731 754     FR-A- 2 910 408
US-A1- 2001 019 482     US-A1- 2007 211 484

EP 2 085 790 B1

**Description**

La présente invention concerne un procédé de protection d'un oeil humain contre un faisceau lumineux émis à partir d'une source de lumière, pour véhicule automobile, et un dispositif de protection permettant de mettre en oeuvre ledit procédé.

Elle trouve une application particulière dans le domaine des véhicules automobiles.

Un procédé de protection d'un oeil humain contre un faisceaux lumineux émis à partir d'une source de lumière, connu de l'état de la technique, utilise une source de lumière qui émet un faisceau laser dont la puissance endommage un oeil humain dès que celui-ci entre dans la zone d'éclairage dudit faisceau lumineux. Afin d'éviter d'endommager l'oeil humain, le procédé émet un premier faisceau lumineux à une puissance réduite et couvrant un zone d'éclairage définie, puis après s'être assuré qu'il n'existe aucune personne dans cette zone d'éclairage, émet le faisceau laser. Un tel procédé est décrit dans le cadre d'une application militaire.

Un problème de cet état de la technique est qu'il n'est pas adapté pour des faisceaux lumineux de plus faible puissance et qui n'endommage l'oeil humain qu'au bout d'un temps d'exposition au faisceau lumineux prolongé, de tels faisceaux étant utilisé dans des applications telle qu'une application pour véhicule automobile. En effet, pour de tels faisceaux, selon le procédé décrit, si une personne entre dans la zone d'éclairage du premier faisceau émis à faible puissance, le deuxième faisceau ne sera jamais émis, ce qui est gênant dans le cadre d'un application automobile.

La présente invention a pour but un procédé de protection d'un oeil humain contre un faisceaux lumineux émis à partir d'une source de lumière, pour véhicule automobile, qui permet de résoudre le problème ci-dessus.

Le document DE3903501 divulgue un procédé applicable à un dispositif de détection de véhicule par infra rouge permettant de protéger l'oeil humain. En cas de bonnes conditions de visibilité, il est procédé à un réglage d'un seuil minimum pour permettre la détection à la distance de l'objet détecté. La première distance servant de référence est donc associée à un seuil de détection minimum.

Selon un premier objet de l'invention, ledit but de la présente invention est atteint par un procédé de protection d'un oeil humain contre un faisceaux lumineux émis à partir d'une source de lumière, pour véhicule automobile, comportant les étapes de :

- définir :

  - une valeur maximum d'exposition pour un temps maximum d'exposition donné admissible pour un oeil humain, et
  - une première distance associée,
    en fonction dudit faisceau lumineux ;

- lorsqu'un obstacle est détecté à une deuxième distance de la source dans une zone d'éclairage dudit faisceau, comparer la première distance avec la deuxième distance ; et
- en fonction de la comparaison, régler la première distance de sorte qu'elle soit inférieure à la deuxième distance.

Comme on va le voir en détail par la suite, le fait de régler la première distance inférieure à la deuxième distance d'un obstacle détecté, qui est par exemple un véhicule suiveur, permet d'éviter à un conducteur du véhicule suiveur de se retrouver exposé au faisceau lumineux pendant un temps supérieur au temps d'exposition admissible, et donc permet d'éviter que les yeux du conducteur ne soient endommagés.

Préférentiellement, la première distance est réglée de sorte qu'elle se trouve à une limite inférieure de la deuxième distance. Cela permet d'avoir un bon compromis entre le fait de ne pas endommager l'oeil humain, et le fait de pouvoir effectuer une détection au moyen du faisceau lumineux de façon efficace, par exemple la détection d'un phénomène perturbateur de visibilité ou encore une détection d'obstacle, ou bien de pouvoir utiliser un moyen de mesure de distance à un obstacle.

Selon des modes de réalisation non limitatifs, le procédé présente en outre les caractéristiques suivantes.

- Le faisceau lumineux est un faisceau infrarouge. Ainsi, le procédé est adapté pour des faisceaux lumineux invisibles. Cela évite d'éblouir les yeux d'un conducteur d'un véhicule suiveur. L'avantage de pouvoir utiliser une longueur d'onde infrarouge est que les principaux outils de détection d'obstacle, mesure de distance, ou encore de détection d'écume soulevée par le véhicule, fonctionnent avec des sources infrarouge. Le procédé selon la présente invention est donc compatible avec ces outils.

- Le réglage de la première distance se fait au fur et à mesure du déplacement de l'obstacle par rapport à la source de lumière. Ainsi, le réglage se fait en temps réel en fonction du déplacement de l'obstacle et donc des variations de la deuxième distance.

- le réglage de la première distance s'effectue en fonction de la puissance et/ou de l'ouverture angulaire du faisceau lumineux. Ainsi, le réglage est simple à mettre en oeuvre.

Selon un deuxième objet de l'invention, elle concerne un dispositif de protection d'un oeil humain contre un faisceaux lumineux émis à partir d'une source de lumière, pour véhicule automobile, comportant :

- une unité de contrôle pour :

- définir :

   - une valeur maximum d'exposition pour un temps maximum d'exposition donné admissible pour un oeil humain, et
   - une première distance associée, en fonction dudit faisceau lumineux ;

- lorsqu'un obstacle est détecté à une deuxième distance de la source dans une zone d'éclairage dudit faisceau, comparer la première distance avec la deuxième distance ; et
- en fonction de la comparaison, régler la première distance de sorte qu'elle soit inférieure à la deuxième distance et à une limite inférieure de la deuxième distance.

Selon un troisième objet de l'invention, elle concerne un produit programme d'ordinateur comportant une ou plusieurs séquences d'instructions exécutables par une unité de traitement d'information, l'exécution desdites séquences d'instructions permettant une mise en oeuvre du procédé selon l'une quelconque des caractéristiques précédentes.

D'autres caractéristiques et avantages de la présente invention seront mieux compris à l'aide de la description et des dessins non limitatifs parmi lesquels :

- la Fig. 1 représente un diagramme d'un mode de réalisation non limitatif du procédé de protection selon l'invention ;
- la Fig. 2 représente un premier schéma explicatif du procédé de la Fig. 1 ;
- la Fig. 3 représente un deuxième schéma explicatif du procédé de la Fig. 1 ;
- la Fig. 4 représente un troisième schéma explicatif du procédé de la Fig. 1 ;
- la Fig. 5 représente un quatrième schéma explicatif du procédé de la Fig. 1 ; et
- la Fig. 6 illustre un mode de réalisation non limitatif d'un dispositif de mise en oeuvre du procédé de la Fig. 1.

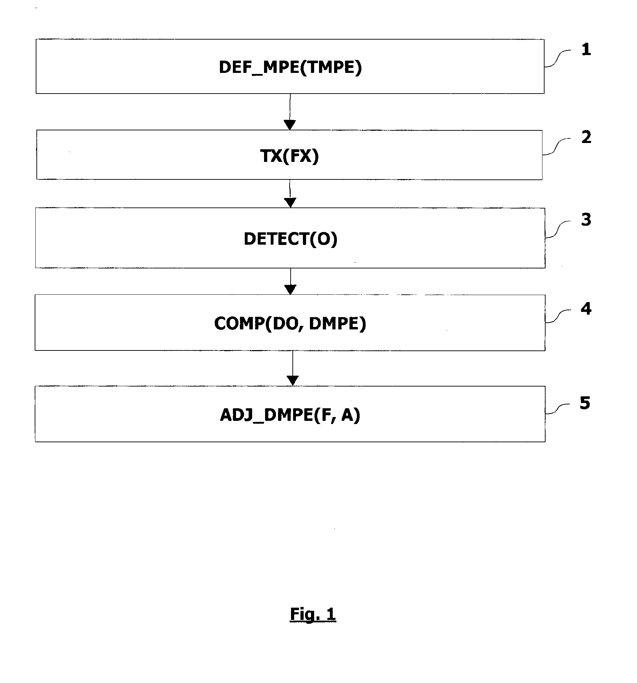

Le procédé de protection d'un oeil humain contre un faisceaux lumineux émis à partir d'une source de lumière, pour véhicule automobile, selon l'invention est décrit dans un mode de réalisation non limitatif à la Fig. 1.
Par véhicule automobile, on entend tout véhicule comprenant un moteur.
Pour l'application véhicule, dans un mode de réalisation non limitatif, la source de lumière se trouve dans un feu arrière d'un véhicule et le faisceau lumineux émis est un faisceau infrarouge qui est donc invisible pour l'oeil humain.
Un faisceau infrarouge de longueur d'onde L de 850nm est pris comme exemple non limitatif pour la suite de la description.
Bien entendu une autre longueur d'onde peut être utilisée dans le domaine infrarouge et notamment le domaine infrarouge proche (longueur d'onde comprise dans une plage de 780nm - 1400nm dans un exemple non limitatif).
Un premier intérêt d'utiliser un faisceau infrarouge est que c'est un type de faisceau couramment utilisé dans les moyens de détection d'obstacle, de détection d'écume soulevée par le véhicule lorsque la route est mouillée, ou de mesure de distance (télémètre laser). Le procédé selon la présente invention est ainsi compatible et applicable à ces moyens de détection et de mesure. Un deuxième intérêt est que, étant invisible, une source SRC qui émet un tel faisceau, et donc un feu qui contient une telle source dans l'exemple pris, ne rentre pas dans la réglementation de signalisation. L'homologation d'un tel feu sera donc plus facile.
Par ailleurs, un intérêt d'avoir un faisceau infrarouge proche est d'obtenir des composants pour la source de lumière SRC à moindre coût et également plus disponibles et communs sur le marché.
Bien entendu, d'autres types de faisceaux peuvent être pris en compte avec leur longueur d'onde associée. Ainsi, dans un exemple non limitatif, on peut utiliser un faisceau laser, de longueur d'onde de 633nm par exemple.
On rappellera qu'une source de lumière SRC qui émet un faisceau lumineux produit un éclairement CE qui est fonction du flux émis F (ou puissance) et de la géométrie du faisceau lumineux émis.
On a donc la formule

$$CE(x,y) = \frac{dF(x,y)}{dS(x,y)} \quad [0]$$

(que l'on intègre sur toute la surface de réception S) avec CE l'éclairement généré par la source SRC à une distance D d'observation et F le flux émis par la source SRC, et S la surface de réception éclairée à la distance d'observation D.
Ainsi l'éclairement CE est l'énergie par unité de surface reçue par un oeil humain qui se trouve à la distance d'observation D de la source SRC.
On rappelle également que plus on s'éloigne de la source SRC, plus l'éclairement CE diminue. Ceci s'applique par exemple dans le cas d'une source divergente ou d'une source convergente lorsqu'un obstacle O se trouve après le point de focalisation de ladite source convergente ou encore d'une source collimatée (source ponctuelle à l'infini, rayons du faisceau parallèles). En effet, le faisceau divergent voit l'éclairement diminuer avec la distance à la source, parce que la surface éclairée augmente avec la distance à la source. Le faisceau collimaté voit son éclairement diminuer en proportion bien moindre et seulement à cause de l'absorption de l'atmosphère. Si l'atmosphère est assimilable à celle d'un temps sec et clair, l'absorption est minime. Par contre, si l'atmosphère contient de l'eau, l'absorption est plus grande et peut être non négligeable. Ce phénomène d'absorption atmosphérique s'applique également au faisceau divergent.

Le procédé de protection comporte les étapes suivantes telles qu'illustrées à la Fig 1:

- définir :

  - une valeur maximum d'exposition MPE pour un temps maximum d'exposition donné TMPE admissible pour un oeil humain, et
  - une première distance associée DMPE, en fonction dudit faisceau lumineux FX (étape DEF_MPE(TMPE)) ;

- lorsqu'un obstacle O est détecté à une deuxième distance DO de la source de lumière SRC dans une zone d'éclairage ZE dudit faisceau FX, comparer la première distance DMPE avec la deuxième distance DO (étape COMP(DO, DMPE)) ; et

- en fonction de la comparaison, régler la première distance DMPE de sorte qu'elle soit inférieure à la deuxième distance DO (étape ADJ_DMPE(F, A)).

Dans un mode de réalisation non limitatif, il comporte en outre une étape supplémentaire de détection d'un obstacle O dans la zone d'éclairage du faisceau lumineux émis (étape DETECT(O)).

Dans un mode de réalisation non limitatif, il comporte en outre une étape supplémentaire d'émission du faisceau lumineux (étape TX(FX)).

On notera que ces deux étapes peuvent ne pas être comprises dans le procédé décrit, mais peuvent faire partie d'un autre procédé exécuté en amont du procédé décrit ou en parallèle.

Dans la suite de la description, on décrit le procédé de protection comportant ces deux étapes supplémentaires.

Les étapes sont décrites en détail ci-après.

**Dans une première étape 1),** on définit une valeur maximum d'exposition MPE, appelée « Maximum Permissive Exposure » en anglais, pour un temps maximum d'exposition donné (jugé intéressant) TMPE admissible pour un oeil humain, et une première distance associée DMPE, en fonction dudit faisceau lumineux FX.

Cette valeur maximum d'exposition admissible MPE correspond à l'énergie maximum qui peut être supportée par l'oeil humain. Elle définit donc un seuil de tolérance de l'oeil à un faisceau de lumière FX qui dépend :

- de la durée d'exposition ;
- de la longueur d'onde du faisceau lumineux FX utilisée ; et
- du type d'onde envoyé (pulsé ou non).

Ainsi, à cette valeur MPE est associée :

- un temps d'exposition maximum admissible TMPE (durée d'exposition), sur une partie de la longueur du faisceau lumineux émis FX, c'est-à-dire sur une zone d'éclairage ZMPE de sa zone d'éclairage ZE, qui permet à un oeil humain d'être éclairé sans danger en présence du faisceau lumineux FX pendant un temps inférieur ou égal à ce temps TMPE. Au delà de ce temps TMPE, l'oeil peut être endommagé dans cette zone ZMPE; et

- une première distance DPME qui détermine la distance à laquelle doit se trouver l'oeil humain de la source de lumière SRC pour le temps d'exposition maximum TMPE associé.

Par exemple, on peut choisir un temps d'exposition maximum admissible TMPE de mille secondes, cela défini une valeur maximum d'exposition MPE et, considérant le faisceau utilisé, cela défini une distance associée DMPE. En deçà de cette distance DMPE, l'oeil humain, pour ne risquer aucun dommage, ne peut rester qu'un temps limité au maximum au temps TMPE, soit mille secondes. Au delà de cette distance, il peut rester indéfiniment car il peut rester par définition un temps supérieur au temps TMPE. En effet, selon les normes « eye safe » internationales toute durée supérieure à mille seconde d'éclairement est considérée comme l'infini.

Pour une longueur d'onde donnée, et un type de faisceau donné, on détermine une valeur maximum d'exposition admissible MPE et la distance DMPE associées, pour avoir un temps maximum d'exposition TMPE suffisant pour pouvoir effectuer les étapes suivantes et permettre ainsi une détection d'obstacle O et un réglage de la valeur d'exposition maximum MPE avant que l'oeil humain ne puisse être endommagé par le faisceau lumineux.

Comme décrit précédemment, la détermination de la valeur maximum d'exposition MPE s'effectue à partir de :

• la durée d'exposition maximale souhaitée
• le spectre de la source utilisé
• le fait que la source soit pulsée ou non

et en utilisant la norme ANSI AMERICAN NATIONAL STANDARD Z136 table 5a. et 5b. qui permet d'avoir une correspondance entre une valeur maximum d'exposition MPE et un temps maximum d'exposition TMPE voulu pour une longueur d'onde donnée.

On peut ainsi faire varier la valeur MPE jusqu'à déterminer celle qui correspond au temps maximum d'exposition TMPE donné.

Une fois la valeur maximum d'exposition MPE déterminée, on utilise la formule **[0]** vue précédemment et adaptée avec un éclairement limite CElim = MPE pour déterminer la première distance associée DMPE.

$$MPE\ (x,y) = \frac{dF(x,y)}{dS(x,y)} \quad [1]$$

avec :

- F : flux émis par la source SRC ;
- S : surface éclairée à une distance d'observation D de la source, ici la distance DMPE.

La formule **[1]** donne de façon simplifiée :
MPE = F/ (DMPE$^2$ *tan(A/2)$^2$)
avec A et F étant connus.

On a ainsi trouvé la valeur maximum d'exposition MPE correspondant au temps maximum d'exposition TMPE voulu, puis la première distance DMPE correspondante.

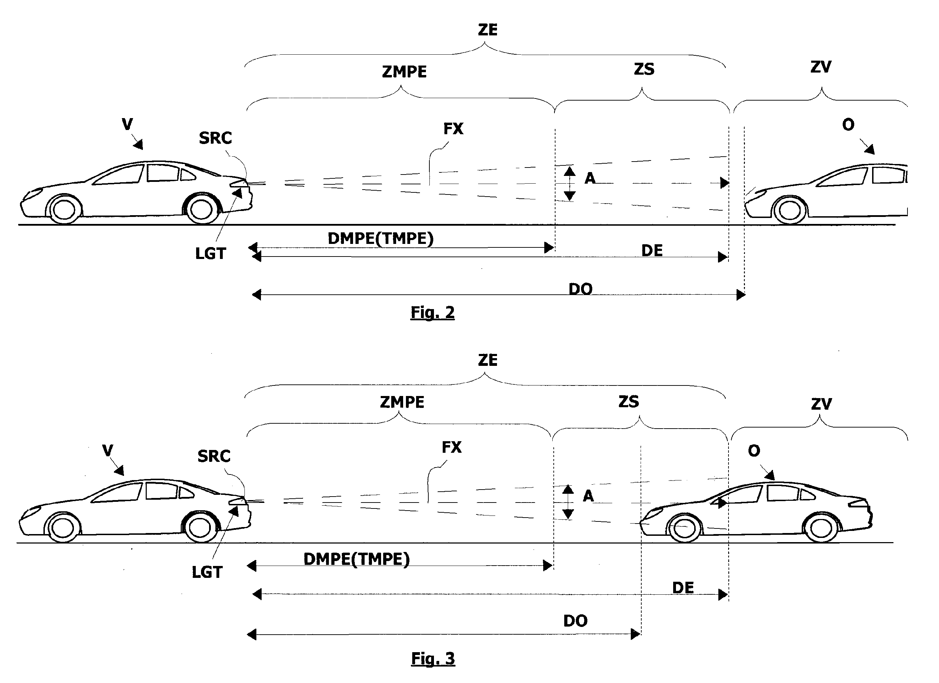

On notera que la puissance d'émission F et l'angle d'ouverture A du faisceau lumineux FX permettent également d'obtenir la zone d'éclairage ZE du faisceau qui correspond à une distance d'éclairage DE illustré sur les Fig. 2 à 5.

Ainsi, les valeurs suivantes MPE sont prises comme exemples de réalisation non limitatifs pour une longueur d'onde L de 850nm et un faisceau FX non pulsé, de puissance F égal à 30mW et pour deux exemples non limitatifs de un temps maximum d'exposition TMPE choisis de 1000sec et 10sec.

- 1er exemple :
  A = 0.05° et DE = 180m.

  - a) Pour un TMPE = 1000sec : MPE = 0.637 mW/cm2 et DPME = 44.32m,
  - b) Pour un TMPE =10sec : MPE = 2 mW/cm2 et DPME = 25.03m.

- 2ème exemple :
  A = 0.23° et DE = 40m.

  - a) Pour un TMPE = 1000sec : MPE = 1.69 mW/cm2 et DPME = 5.92m,
  - b) Pour un TMPE = 10sec : MPE = 5.28 mW/cm2 et DPME = 3.34m.

- 3ème exemple :
  A = 0.45° et DE = 20m.

  - a) Pour un TMPE = 1000 sec : MPE = 3.35 mW/cm2 avec et DPME = 2.14m,
  - b) Pour un TMPE = 10 sec : MPE = 10.20 mW/cm2 avec et DPME = 1.22m.

**Dans une deuxième étape 2)**, on émet le faisceau lumineux FX. L'émission se fait à partir de la source de lumière SRC qui est, dans un exemple non limitatif, intégrée dans un feu arrière LGT du véhicule V comme illustrée sur les Fig. 2 à 5. Bien entendu, les feux arrière LGT émettent par ailleurs leur propre faisceau visible par l'oeil humain pour signaler le véhicule à un véhicule suiveur O dans l'exemple pris.

On notera que le faisceau lumineux FX peut être pulsé ou non.

Comme décrit précédemment, dans un exemple non limitatif, le faisceau lumineux émis est infrarouge. Un tel faisceau (qui est invisible pour l'oeil humain) permet notamment de déterminer s'il existe un phénomène perturbateur de visibilité pour un véhicule suiveur O tel qu'une gerbe d'eau générée par les roues arrière du véhicule en présence d'eau, ou encore de détecter la présence d'obstacle et/ou d'en mesurer leur distance à la source.

L'émission d'un tel faisceau lumineux étant connue de l'homme du métier, elle n'est pas décrite ici.

**Dans une troisième étape 3)**, on détecte un obstacle O dans la zone d'éclairage ZE du faisceau lumineux émis FX. Dans le cadre de l'application véhicule automobile décrite, un obstacle O peut être dans des exemples non limitatifs :

- une personne qui se trouve derrière le véhicule V considéré ; ou
- un véhicule suiveur qui se trouve derrière le véhicule V considéré.

La détection d'obstacle étant connue de l'homme du métier, elle n'est pas décrite ici.

Ainsi, si un obstacle O se trouve dans la zone d'éclairage ZE du faisceau lumineux FX, il est détecté et la distance DO entre ledit obstacle O et la source de lumière SRC est déterminée. Cette distance DO est appelée deuxième distance.

Dans l'exemple non limitatif des Fig. 2 à 5, le cas d'un obstacle O tel qu'un véhicule suiveur est illustré.

Sur la Fig. 2, on peut voir que le véhicule suiveur O ne se trouve pas dans la zone d'éclairage ZE du faisceau lumineux FX. Il se trouve donc dans une zone ZV qui est sans danger pour les yeux du conducteur du véhicule suiveur. La distance DO entre le véhicule suiveur O et la source de lumière SRC du véhicule V considéré est donc supérieure à la première distance DMPE.

On notera que dans cet exemple, la distance DO considérée est la distance entre la source de lumière SRC du véhicule V considéré et le capot du véhicule suiveur O par exemple.

Sur la Fig. 3, on peut voir que le véhicule suiveur O est entré dans la zone d'éclairage ZE du faisceau lumineux FX. Mais il se trouve dans une sous-zone ZS qui est toujours sans danger pour les yeux du conducteur du véhicule suiveur O. La distance DO entre le véhicule suiveur O et la source de lumière SRC du véhicule V considéré est toujours supérieure à la première distance DMPE.

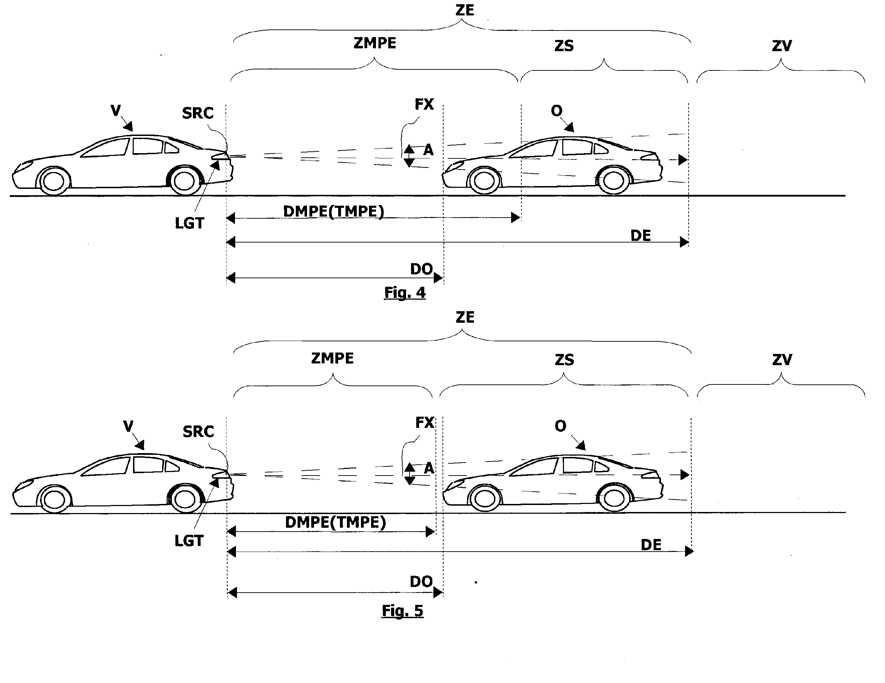

Par contre, sur la Fig. 4, on peut voir que le véhicule suiveur O est entré dans la zone d'éclairage ZE du faisceau lumineux FX et qu'il se trouve dans une sous-zone ZMPE qui peut représenter un danger pour les yeux du conducteur du véhicule suiveur O si celui-ci demeure dans cette zone ZMPE pendant un temps supérieur au temps d'exposition maximum admissible TMPE. La distance DO entre le véhicule suiveur O et la source de lumière SRC du véhicule V considéré est en effet inférieure à la première distance DMPE.

**Dans une quatrième étape 4)**, lorsqu'un obstacle O, tel qu'un véhicule suiveur O, est détecté à une deuxième distance DO de la source de lumière SRC dans la zone d'éclairage ZE dudit faisceau FX, on compare la première distance DMPE avec la deuxième distance DO.

**Dans une cinquième étape 5)**, en fonction de la comparaison, on règle la première distance DMPE de sorte qu'elle soit inférieure à la deuxième distance DO.

Ainsi, lors de la comparaison, si la première distance DMPE est inférieure à la deuxième distance DO, comme illustré à la Fig. 3, alors deux modes non limitatifs sont possibles :

- Dans un premier mode de réalisation, la valeur de la première distance DMPE, qui a été déterminée dans la première étape, reste inchangée. L'oeil ne risque toujours pas d'être endommagé.
- Dans un second mode de réalisation, on règle la valeur de la première distance DMPE de sorte qu'elle se trouve à une limite inférieure LIM de la deuxième distance DO, c'est-à-dire inférieure à la deuxième distance DO mais au voisinage de celle-ci (réglage en centimètres ou en pourcentage par rapport à la précision de la détection par exemple). Cela permet d'avoir un maximum d'énergie provenant du faisceau lumineux pour pouvoir détecter un phénomène perturbateur tel qu'une gerbe d'eau tout en préservant la sécurité de l'oeil.

Par contre, lors de la comparaison, si la première distance DMPE est supérieure à la deuxième distance DO, comme illustré à la Fig. 4, alors il existe un risque pour l'oeil humain d'être endommagé s'il reste à la distance DO pendant un temps supérieur au temps maximum d'exposition TMPE donné. Dans ce cas, on règle la valeur de la première distance DMPE de sorte qu'elle soit inférieure à la deuxième distance DO.

Dans une variante de réalisation non limitative, on règle la première distance DMPE de sorte qu'elle se trouve à la limite inférieure LIM de la deuxième distance DO, c'est-à-dire qu'elle est inférieure à la deuxième distance DO mais se trouve au voisinage de celle-ci (réglage en centimètres ou en pourcentage par rapport à la précision de la détection par exemple), tel que représenté sur la figure 5.

Cela permet d'ajuster au mieux l'éclairement CE pour avoir :

- d'une part suffisamment d'énergie pour détecter un phénomène perturbateur tel qu'une gerbe d'eau, et

- d'une part pouvoir la détecter à une distance assez lointaine, avec le faisceau infrarouge FX dans l'exemple pris ; et
- d'autre part émettre un faisceau lumineux FX qui n'est pas dangereux pour l'oeil humain.

On a ainsi un bon compromis entre une détection de gerbe d'eau efficace et une émission d'un faisceau lumineux sécurisée.

Dans un mode de réalisation non limitatif, le réglage de la première distance DMPE se fait au moyen de :

- la norme ANSI Z136 table 5a. et 5b vue précédemment, et
- des caractéristiques d'émission du faisceau lumineux FX (flux et caractéristiques géométriques telles que notamment angle d'ouverture

A) en utilisant l'équation **[1]** vue précédemment avec : MPE = F/ (DMPE$^2$ *tan(A/2)$^2$).

La valeur maximum d'exposition MPE déterminée lors de la première étape est ainsi une limite de référence maximum d'éclairement à ne pas dépasser.

La valeur maximum d'exposition MPE et le temps maximum d'exposition TMPE ayant été déterminés lors de la première étape, on fait varier cette fois-ci :

- le flux F (ou puissance) du faisceau lumineux FX, et/ou
- l'angle d'ouverture A du faisceau lumineux FX pour obtenir une première distance DMPE inférieure (ou à la limite inférieure LIM) de la deuxième distance DO.

Ainsi, le réglage de la première distance DMPE s'effectue, selon un mode de réalisation non limitatif, en fonction de la puissance F et/ou de l'ouverture angulaire A du faisceau lumineux FX.

Ainsi, l'éclairement CE produit par la source de lumière SRC (ou éclairement du faisceau lumineux FX) à la deuxième distance DO, c'est-à-dire au point obstacle O, sera toujours inférieur à l'éclairement limite de référence CElim qui est la valeur maximum d'exposition MPE de référence définie lors de la première étape.

En effet, comme décrit précédemment, l'éclairement CE permet de déterminer la quantité d'énergie par unité de surface reçue par un oeil à une distance d'observation D de la source de lumière SRC qui émet le faisceau lumineux FX. Dans notre cas, cette distance d'observation D est la deuxième distance DO.

Or, comme l'éclairement CE diminue au fur et à mesure que l'on s'éloigne de la source émettrice SRC dans l'exemple pris (d'une source divergente par exemple), l'éclairement mesuré à l'obstacle O, c'est-à-dire à la distance d'observation DO, sera toujours inférieur à l'éclairement mesuré à la distance d'observation DMPE, car la deuxième distance DO (par rapport à la source de lumière SRC) est supérieure à la première distance DMPE (par rapport à la source de lumière SRC).

On rappelle que l'éclairement CE mesuré à la distance d'observation DMPE est la limite de référence calculée CElim=MPE.

Ainsi, on évite à un oeil humain d'être endommagé par le faisceau lumineux FX, puisque après le réglage de la première distance DMPE, le conducteur d'un véhicule suiveur O se trouvera toujours à une deuxième distance DO supérieure à la première distance DMPE, et donc dans une zone de protection où le temps maximum d'exposition TMPE n'intervient plus, ladite zone étant donc sans danger pour les yeux du conducteur du véhicule suiveur O.

Ainsi, grâce au procédé décrit, l'oeil ne peut jamais être endommagé par le faisceau lumineux FX.

Dans un mode de réalisation non limitatif, le procédé décrit est exécuté lorsque le véhicule considéré V est entrain de rouler. Ainsi, dans ce cas, le procédé est assujetti à la vitesse VIT du véhicule V. Il est déclenché dès que la vitesse VIT du véhicule est différente de zéro. En effet, le faisceau lumineux FX considéré est, dans l'exemple pris, un faisceau infrarouge qui permet de détecter un phénomène perturbateur de visibilité tel qu'une gerbe d'eau. Or les gerbes d'eau n'apparaissent que lorsque le véhicule roule. Cela permet ainsi d'exécuter le procédé lorsque le faisceau lumineux FX est utile, c'est-à-dire lorsqu'il y a des risques de gerbes d'eau. Dans une variante de réalisation, on peut prévoir une vitesse VIT minimum de déclenchement du procédé, de 50km/h dans un exemple non limitatif, qui correspond à l'apparition des gerbes d'eau par exemple. En effet, en dessous de 50km/h, on peut considérer qu'il n'y a pas de création de gerbes d'eau, même si le véhicule roule.

Ainsi, dans ce mode non limitatif, le procédé n'est pas exécuté inutilement.

Le procédé décrit peut également s'appliquer à des systèmes de détection d'obstacle et/ou de mesure de distance par émission d'un faisceau lumineux potentiellement dommageable pour l'oeil humain.

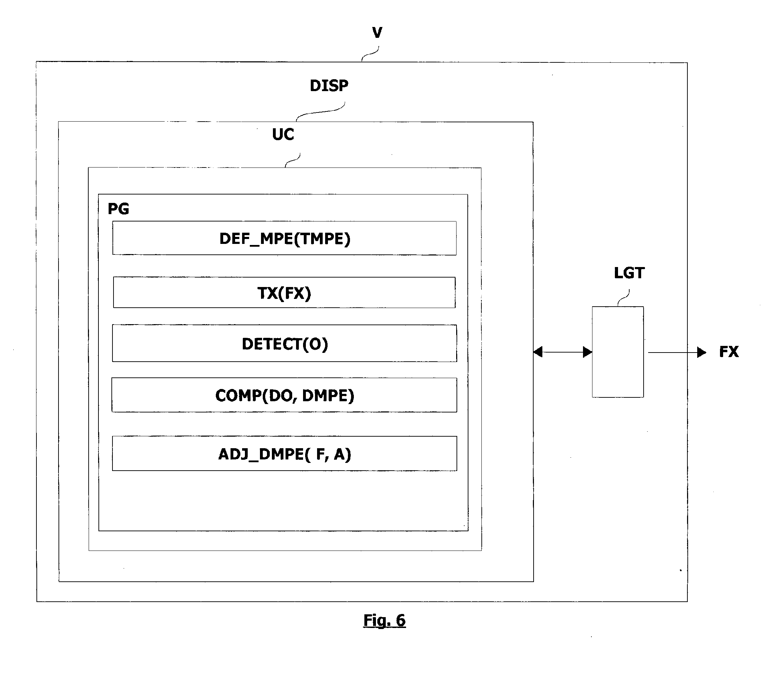

Le procédé de l'invention est mis en oeuvre par un dispositif DISP de protection d'un oeil humain contre un faisceaux lumineux FX émis à partir d'une source de lumière SRC, pour véhicule automobile (V), représenté à la Fig. 6. Ce dispositif DISP est intégré dans le véhicule V.

Ce dispositif DISP comporte notamment :

- une unité de contrôle UC pour :

  - définir :

    - une valeur maximum d'exposition MPE pour un temps maximum d'exposition donné TMPE admissible pour un oeil humain, et
    - une première distance associée DMPE, en fonction dudit faisceau lumineux FX ;

- lorsqu'un obstacle O est détecté à une deuxième distance DO de la source de lumière SRC dans une zone d'éclairage ZE dudit faisceau FX, comparer la première distance DMPE avec la deuxième distance DO ; et

- en fonction de la comparaison, régler la première distance DMPE de sorte qu'elle soit inférieure à la deuxième distance DO.

Selon un mode de réalisation non limitatif, le dispositif DISP comporte en outre un dispositif de détection DETECT d'obstacle O dans la zone d'éclairage du faisceau lumineux.

Dans des modes de réalisation non limitatifs, la détection d'un obstacle O se fait au moyen d'un télémètre qui utilise le faisceau infrarouge FX ou d'un LIDAR connu de l'homme du métier.

On notera que le LIDAR utilise un faisceau lumineux annexe FX2 émis par une seconde source de lumière SRC2 différente du faisceau principal visible émis par le feu et qui permet d'effectuer un balayage sur la zone d'éclairage du faisceau principal visible en envoyant des impulsions lumineuses pour détecter un obstacle O. Un écho de ce faisceau annexe FX2 est renvoyé par l'obstacle O s'il se trouve dans ladite zone d'éclairage, et grâce au retard défini entre les impulsions lumineuses envoyées et l'écho, on détermine la distance DO2 entre l'obstacle O et la source de lumière SRC2 du faisceau annexe FX2. On notera que ce faisceau annexe FX2 peut être le faisceau infrarouge FX. Dans ce cas, ce dernier est donc utilisé pour détecter non seulement un phénomène perturbateur de visibilité tel qu'une gerbe d'eau mais également tout autre obstacle O tel qu'un véhicule suiveur.

Bien entendu, tout autre mode de détection d'obstacle peut être utilisé.

On notera que la mise en oeuvre du procédé de protection exposé ci-dessus peut être effectuée au moyen d'un dispositif micro programmé « software », d'une logique câblée et/ou de composants électroniques « hardware ».

Ainsi, le dispositif de protection DISP peut comporter un produit programme d'ordinateur PG comportant une ou plusieurs séquences d'instructions exécutables par une unité de traitement d'information telle qu'un microprocesseur, ou d'une unité de traitement d'un microcontrôleur, d'un ASIC, d'un ordinateur etc., l'exécution desdites séquences d'instructions permettant une mise en oeuvre du procédé décrit.

Un tel programme d'ordinateur PG peut être inscrit en mémoire non volatile inscriptible de type ROM ou en mémoire non volatile réinscriptible de type EEPROM ou FLASH. Ledit programme d'ordinateur PG peut être inscrit en mémoire en usine ou encore chargé en mémoire

ou téléchargé à distance en mémoire. Les séquences d'instructions peuvent être des séquences d'instructions machine, ou encore des séquences d'un langage de commande interprétées par l'unité de traitement au moment de leur exécution.

Dans l'exemple non limitatif de la Fig. 6, le programme d'ordinateur PG est inscrit dans une mémoire de l'unité de contrôle UC du dispositif DISP.

Bien entendu, la description du procédé n'est pas limitée aux modes de réalisation et exemples décrits ci-dessus.

Ainsi, l'exemple décrit ci-dessus pour les feux arrière LGT de signalisation n'est pas limitatif, et le même principe peut être appliqué pour des projecteurs PJ (à l'avant du véhicule).

Enfin, bien entendu elle peut s'appliquer à des applications différentes de l'application véhicule automobile décrite. Par exemple, on peut l'appliquer à des applications militaires, telles que des viseurs à infrarouge ou laser permettant de détecter des personnes.

Ainsi, l'invention présente notamment les avantages suivants :

- Elle permet de protéger un oeil humain en tenant compte d'un ensemble de paramètres qui peuvent engendrer un endommagement d'un oeil humain, à savoir notamment :

  - la distance oeil-source de lumière ;
  - la durée d'exposition de l'oeil ;
  - la géométrie du faisceau lumineux émis (notamment son ouverture angulaire) ;
  - le flux F émis par la source de lumière SRC (c'est-à-dire la puissance du faisceau lumineux émis) ;
  - la longueur d'onde du faisceau lumineux utilisée ; et
  - la nature du faisceau lumineux émis (pulsé ou non).

- Elle est simple à mettre en oeuvre (du fait de l'utilisation d'une norme et du réglage de la puissance et/ou de l'ouverture de l'angle du faisceau émis) ;
- Elle est facilement intégrable dans un système d'éclairage et de signalisation tel qu'un projecteur ou un feu (source de lumière SRC à infrarouge, software/hardware) sans implantation contraignante sur la carrosserie d'un véhicule ;
- Elle permet un ajustement de la première distance DMPE en temps réel puisque le réglage est effectué au fur et à mesure du déplacement d'un obstacle O, c'est-à-dire au fur et à mesure de la variation de la deuxième distance obstacle O-source SRC ;
- Elle permet un fonctionnement lorsque le véhicule automobile considéré est entrain de rouler ;
- Elle prend très peu de temps en terme CPU et donc le réglage de la première distance DMPE se fait très rapidement de sorte qu'une personne ne demeure pas devant le faisceau lumineux FX au delà du temps d'exposition maximum TMPE ;
- Elle est adaptable à tout type de faisceau lumineux dont le temps d'exposition maximum est supérieur à 1 sec, et notamment les faisceaux invisibles à l'oeil nu tels que les faisceaux infrarouge ;

- Elle représente un moindre coût en utilisant des composants standard pour une source de lumière émettant un faisceau lumineux à infrarouge proche ;
- Elle est particulièrement bien adaptée pour protéger l'oeil contre des faisceaux lumineux invisibles à l'oeil car ce dernier ne se protège pas automatiquement (en clignant ou en se plissant) comme dans le cas d'un faisceau lumineux visible ;
- Elle permet d'obtenir un bon compromis entre la protection efficace d'un oeil humain et le fait de détecter un obstacle O à une distance lointaine par rapport à la source de lumière. On a donc un maximum d'énergie tout en protégeant l'obstacle O et donc l'oeil humain, grâce à la limite inférieure déterminée LIM notamment ;
- Elle permet de toujours éclairer (par infrarouge) l'obstacle O par ledit faisceau FX, tout en sécurisant l'oeil ; Ainsi le faisceau FX permet non seulement de détecter une gerbe d'eau mais également de détecter un obstacle O tel qu'un véhicule suiveur ;
- la sécurité oculaire est également toujours optimale, c'est-à-dire que où que se situe l'obstacle O, il est dans une zone protégée sans danger pour l'oeil humain. La zone de protection est donc maximale suivant la position de l'obstacle ; et
- Le faisceau lumineux FX est toujours émis qu'un obstacle O soit présent ou non dans la zone d'éclairage dudit faisceau lumineux FX.

## Revendications

1. Procédé de protection d'un oeil humain contre un faisceau lumineux (FX) émis à partir d'une source de lumière (SRC), pour véhicule automobile (V), comportant les étapes de :

   - définir :

     - une valeur maximum d'exposition (MPE) pour un temps maximum d'exposition donné (TMPE) admissible pour un oeil humain, et
     - une première distance associée (DMPE), en fonction dudit faisceau lumineux (FX) ;

   - lorsqu'un obstacle (O) est détecté à une deuxième distance (DO) de la source de lumière (SRC) dans une zone d'éclairage (ZE) dudit faisceau (FX), comparer la première distance (DMPE) avec la deuxième distance (DO) ; et
   - en fonction de la comparaison, régler la première distance (DMPE) de sorte qu'elle soit inférieure à la deuxième distance (DO) et à une limite inférieure (LIM) de la deuxième distance (DO).

**2.** Procédé de protection selon la revendication 1, selon lequel le faisceau lumineux (FX) est un faisceau infrarouge.

**3.** Procédé de protection selon l'une quelconque des revendications précédentes, selon lequel le réglage de, la première distance (DMPE) se fait au fur et à mesure du déplacement de l'obstacle (O) par rapport à la source de lumière (SRC).

**4.** Procédé de protection selon l'une quelconque des revendications précédentes, selon lequel le réglage de la première distance (DMPE) s'effectue en fonction de la puissance (F) et/ou de l'ouverture angulaire (A) du faisceau lumineux (FX).

**5.** Dispositif (DISP) de protection d'un oeil humain contre un faisceau lumineux (FX) émis à partir d'une source de lumière (SRC), pour véhicule automobile (V), comportant :

- une unité de contrôle (UC) pour :

- définir :

- une valeur maximum d'exposition (MPE) pour un temps maximum d'exposition donné (TMPE) admissible pour un oeil humain, et
- une première distance associée (DMPE),
en fonction dudit faisceau lumineux (FX) ;

- lorsqu'un obstacle (O) est détecté à une deuxième distance (DO) de la source de lumière (SRC) dans une zone d'éclairage (ZE) dudit faisceau (FX), comparer la première distance (DMPE) avec la deuxième distance (DO) : et
- en fonction de la comparaison, régler la première distance (DMPE) de sorte qu'elle soit inférieure à la deuxième distance (DO) et à une limite inférieure (LIM) de la deuxième distance (DO).

**6.** Produit programme (PG) d'ordinateur comportant une ou plusieurs séquences d'instructions exécutables par une unité de traitement d'information, l'exécution desdites séquences d'instructions permettant une mise en oeuvre du procédé selon l'une quelconque des revendications précédentes 1 à 4.

**Patentansprüche**

**1.** Verfahren für Kraftfahrzeuge (V) zum Schutz eines menschlichen Auges vor einem von einer Lichtquelle (SRC) emittierten Lichtstrahl (FX), welches die Schritte umfasst:

- Festlegen:

- eines maximalen Expositionswertes (MPE) einer gegebenen, für ein menschliches Auge zulässigen maximalen Expositionsdauer (TMPE) und
- einer zugeordneten ersten Entfernung (DMPE),
in Abhängigkeit des Lichtstrahls (FX),

- Vergleichen, bei Erfassung eines Hindernisses (O) in einer zweiten Entfernung (DO) von der Lichtquelle (SRC) in einem Beleuchtungsbereich (ZE) des Lichtstrahls (FX), der ersten Entfernung (DMPE) mit der zweiten Entfernung (DO);
und
- Einstellen der ersten Entfernung (DMPE) in Abhängigkeit des Vergleichs derart, dass diese geringer ist als die zweite Entfernung (DO) und als ein unterer Grenzwert (LIM) der zweiten Entfernung (DO).

**2.** Schutzverfahren nach Anspruch 1,
bei dem der Lichtstrahl (FX) ein Infrarotlicht ist.

**3.** Schutzverfahren nach einem der vorhergehenden Ansprüche,
bei dem das Einstellen der ersten Entfernung (DMPE) je nach Ortsveränderung des Hindernisses (O) bezüglich der Lichtquelle (SRC) erfolgt.

**4.** Schutzverfahren nach einem der vorhergehenden Ansprüche,
bei dem das Einstellen der ersten Entfernung (DMPE) in Abhängigkeit der Leistung (F) und/oder des Öffnungswinkels (A) des Lichtstrahls (FX) erfolgt.

**5.** Vorrichtung (DISP) für Kraftfahrzeuge (V) zum Schutz eines menschlichen Auges vor einem von einer Lichtquelle (SRC) emittierten Lichtstrahl (FX), mit:

- einer Steuereinheit (UC)

- zur Festlegung

- eines maximalen Expositionswertes (MPE) einer gegebenen, für ein menschliches Auge zulässigen maximalen Expositionsdauer (TMPE) und

- einer zugeordneten ersten Entfernung (DMPE),
in Abhängigkeit des Lichtstrahls (FX);

- zum Vergleich, bei Erfassung eines Hindernisses (O) in einer zweiten Entfernung (DO) von der Lichtquelle (SRC) in einem Beleuchtungsbereich (ZE) des Lichtstrahls (FX), der ersten Entfernung (DMPE) mit der zweiten Entfernung (DO); und
- zum Einstellen der ersten Entfernung (DMPE) in Abhängigkeit des Vergleichs derart, dass diese geringer ist als die zweite Entfernung (DO) und als ein unterer Grenzwert (LIM) der zweiten Entfernung (DO).

**6.** Computerprogrammprodukt (PG) mit einer oder mehreren von einer Datenverarbeitungseinheit ausführbaren Befehlsfolgen, wobei das Ausführen der Befehlsfolgen eine Durchführung des Verfahrens nach einem der Ansprüche 1 bis 4 erlaubt.

**Claims**

**1.** Method for protection of a human eye against a light beam (FX) emitted by a source of light (SRC) for a motor vehicle (V), comprising the steps of:

- defining:

- a maximum exposure value (MPE) for an admissible given maximum exposure time (TMPE) for a human eye, and
- a first associated distance (DMPE), according to the said light beam (FX):

- when an obstacle (O) is detected at a second distance (DO) from the source of light (SRC) in a lighting area (ZE) of the said beam (FX), comparing the first distance (DMPE) with the second distance (DO); and
- according to the comparison, regulating the first distance (DMPE) so that it is shorter than the second distance (DO) and at a lower limit (LIM) of the second distance (DO).

**2.** Method for protection according to claim 1, wherein the light beam (FX) is an infrared beam.

**3.** Method for protection according to either of the preceding claims, wherein the first distance (DMPE) is regulated as the obstacle (O) is displaced relative to the source of light (SRC).

**4.** Method for protection according to any one of the preceding claims, wherein the first distance (DMPE) is regulated according to the power (F) and/or the angular opening (A) of the light beam (FX).

**5.** Device (DISP) for protection of a human eye against a light beam (FX) emitted by a source of light (SRC) for a motor vehicle (V), comprising:

- a control unit (UC) in order to:

- define:

- a maximum exposure value (MPE) for an admissible given maximum exposure time (TMPE) for a human eye, and
- a first associated distance (DMPE), according to the said light beam (FX):

- when an obstacle (O) is detected at a second distance (DO) from the source of light (SRC) in a lighting area (ZE) of the said beam (FX), comparing the first distance (DMPE) with the second distance (DO); and
- according to the comparison, regulating the first distance (DMPE) so that it is shorter than the second distance (DO) and at a lower limit (LIM) of the second distance (DO).

**6.** Computer programme product (PG) comprising one or a plurality of sequences of instructions which can be executed by a data processing unit, the execution of the said sequences of instructions permitting implementation of the method according to any one of the preceding claims 1 to 4.

Fig. 1

Fig. 2

Fig. 3

Fig. 4

Fig. 5

Fig. 6

**RÉFÉRENCES CITÉES DANS LA DESCRIPTION**

**Documents brevets cités dans la description**

- DE 3903501